# EUROPEAN PATENT APPLICATION

(11) **EP 4 678 409 A1**
(43) Date of publication of application: **14.01.2026**
(21) Application number: 25184110.2
(22) Date of filing: 20.06.2025
(51) Int. Cl.: B60C 1/00, C08L 9/06

(54) **RUBBER COMPOSITION AND PNEUMATIC TIRE**

(30) Priority: 11.07.2024 JP 2024111454; 11.07.2024 JP 2024111457
(71) Applicant: Toyo Tire Corporation, Itami-shi, Hyogo 664-0847 (JP)
(72) Inventor: HASHIMOTO, Akari, ITAMI-SHI, HYOGO, 664-0847 (JP); KIMURA, Takayoshi, ITAMI-SHI, HYOGO, 664-0847 (JP)
(74) Representative: Cabinet Beau de Loménie

(57) **Abstract**

A rubber composition comprising, per 100 parts by mass of a rubber component containing at least a diene-based rubber, 0.1 to 10 parts by mass of a compound represented by the following general formula (1): 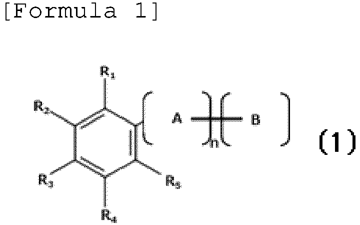 wherein at least one of R₁ to R₅ is an -OH group or an -OCH₃ group and others are each an -H group or a hydrocarbon group having 1 to 20 carbon atoms, A is an unsaturated bond or an alkylene group having 1 to 20 carbon atoms and optionally having an -H group, a -CH₃ group, an -NH₂ group, an -O- group, or an -OH group, n is an integer of 0 to 10, and B is a -COOH group, an -OH group, or an =O group and optionally forms a ring structure with adjacent R₁ or R₅; and 20 to 150 parts by mass of silica.

## Description

### Field of the Invention

The present invention relates to a rubber composition and a pneumatic tire including a rubber part containing a vulcanized rubber of the rubber composition.

### Description of the Related Art

Generally, tires are used in a variety of driving conditions, and it is required to improve wet grip performance (hereinafter, simply referred to as "WET performance"), which is grip performance on wet road surfaces, for example, in rain. However, when the formulation of rubber compositions is designed to improve such WET performance, the low fuel consumption of vulcanized rubber may deteriorate, so techniques to improve them in a well-balanced manner were required.

Incidentally, Patent Document 1 below describes a rubber composition containing a predetermined amount of a specific compound per 100 parts by mass of the total amount of the rubber component for the purpose of improving heat aging resistance of a vulcanized rubber.

### Prior Art Document

### Patent Document

Patent Document 1: JP-A-2023-089553

### SUMMARY OF THE INVENTION

In order to achieve both WET performance and low fuel consumption of pneumatic tires, it is crucial to optimize the loss-tangent (tanδ) of the raw material. Generally, WET performance is highly dependent on tanδ at 0°C (hereafter referred to as tanδ (0°C)) for the raw material rubber composition, and a larger tanδ (0°C) is superior in WET performance of pneumatic tires. On the other hand, the low fuel consumption is highly dependent on tanδat 60°C (hereafter referred to as tanδ (60°C)) of the rubber composition used as the raw material, and the low fuel consumption of pneumatic tires is superior when tanδ (60°C) is smaller.

The vulcanized rubber of the rubber composition described in Patent Document 1 is excellent in heat aging resistance, but as a result of intensive studies by the present inventors, it has been found that there is room for further improvement in terms of WET performance and low fuel consumption in order to use the vulcanized rubber as a rubber part of a pneumatic tire.

In view of the above circumstances, it is an object of the present invention to provide a rubber composition as a raw material of a vulcanized rubber excellent in WET performance and low fuel consumption, when used as a rubber part of a pneumatic tire.

Further, an object of the present invention is to provide a pneumatic tire which is excellent in WET performance and low fuel consumption.

The above object can be achieved by the present invention as described below. Specifically, the present invention relates to a rubber composition (1) containing, per 100 parts by mass of a rubber component containing at least a diene-based rubber, 0.1 to 10 parts by mass of a compound represented by the following general formula (1): 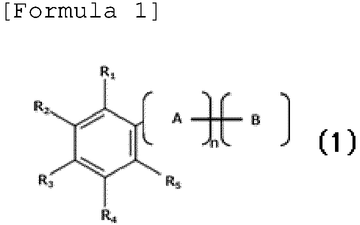 wherein at least one of R₁ to R₅ is an -OH group or an -OCH₃ group and others are each an -H group or a hydrocarbon group having 1 to 20 carbon atoms, A is an unsaturated bond or an alkylene group having 1 to 20 carbon atoms and optionally having an -H group, a -CH₃ group, an -NH₂ group, an -O- group, or an -OH group, n is an integer of 0 to 10, and B is a -COOH group, an -OH group, or an =O group and optionally forms a ring structure with adjacent R₁ or R₅; and 20 to 150 parts by mass of silica.

The rubber composition (1) is preferably a rubber composition (2) in which the compound represented by the general formula (1) is a naturally occurring compound.

The rubber composition (1) or (2) is preferably a rubber composition (3) in which the compound represented by the general formula (1) is at least one of 3,4-dihydroxycinnamic acid and 3,4-dimethoxycinnamic acid.

The present invention also relates to a pneumatic tire (4) including a rubber part containing a vulcanized rubber of any one of the rubber compositions (1) to (3).

In addition, the above object can be achieved by the present invention as described below. That is, the present invention relates to a rubber composition (5) containing, per 100 parts by mass of a rubber component containing at least a diene-based rubber, 0.1 to 10 parts by mass of a compound having an XLogP of 0.5 or more and 10 or less; and 20 to 150 parts by mass of silica.

The rubber composition (5) is preferably a rubber composition (6) in which the compound having an XLogP of 0.5 or more and 10 or less is a naturally occurring compound.

The rubber composition (5) or (6) is preferably a rubber composition (7) in which the compound having an XLogP of 0.5 or more and 10 or less is at least one of 3,4-dihydroxycinnamic acid and 3,4-dimethoxycinnamic acid.

The present invention also relates to a pneumatic tire (8) including a rubber part containing a vulcanized rubber of any one of the rubber compositions (5) to (7).

The rubber composition according to the present invention contains 0.1 to 10 parts by mass of the compound represented by the general formula (1) and 20 to 150 parts by mass of silica. As a result, WET performance and low fuel consumption of the finally produced vulcanized rubber are dramatically improved. The reason for achieving such an effect is considered as follows.

The compound represented by the general formula (1) has high hydrophilicity, and thus tends to aggregate in the rubber composition, so that the viscosity of the rubber composition increases. Therefore, a high shear state of the rubber composition can be maintained while suppressing an excessive temperature increase during rubber kneading. As a result, the reaction between the compound represented by the general formula (1) and the rubber component proceeds at a high level. In addition, since the rubber composition according to the present invention contains silica and the compound described in the general formula (1) has high hydrophilicity, it contributes to improving dispersibility of silica in the rubber composition, and the reaction of the compound described in the general formula (1) with the rubber component proceeds at a higher level while enhancing the reinforcing effect of silica. This leads to an increase in tanδ at 0°C (tanδ (0°C)) while a decrease in tanδ (60°C). Consequently, WET performance and low fuel consumption of vulcanized rubber may be further improved.

Note that, when silica is blended in the rubber composition, silica tends to aggregate in the rubber component, and therefore, the viscosity of the rubber composition is excessively increased, which may deteriorate the processability. However, the rubber composition according to the present invention contains the compound described in the general formula (1) together with silica, and the dispersibility of silica in the rubber composition is improved due to the high hydrophilicity of the compound described in the general formula (1). Therefore, the rubber composition according to the present invention is also excellent in processability.

The rubber composition according to the present invention contains 0.1 to 10 parts by mass of the compound represented by the general formula (1) and 20 to 150 parts by mass of silica. As a result, the WET performance and the low fuel consumption of the finally produced vulcanized rubber are dramatically improved. The reason for achieving such an effect is considered as follows.

The compound having an XLogP of 0.5 or more and 10 or less has high hydrophilicity, and thus tends to aggregate in the rubber composition, so that the viscosity of the rubber composition increases. Therefore, a high shear state of the rubber composition can be maintained while suppressing an excessive temperature increase during rubber kneading. As a result, the reaction between the compound having an XLogP of 0.5 or more and 10 or less and the rubber component proceeds at a high level. This leads to an increase in tanδ at 0°C (tanδ (0°C)) while a decrease in tanδ (60°C). Consequently, WET performance and low fuel consumption of vulcanized rubber may be further improved. In the present invention, when a compound having an XLogP of less than 0.5 is used, it is considered that the compound has too high hydrophilicity and the dispersion of a filler is deteriorated. On the other hand, when a compound having an XLogP of more than 10 is used, it is considered that the compound has low hydrophilicity, and thus has good compatibility with rubber, so that a high shear state cannot be maintained.

Note that, when silica is blended in the rubber composition, silica tends to aggregate in the rubber component, and therefore, the viscosity of the rubber composition is excessively increased, which may deteriorate the processability. However, the rubber composition according to the present invention contains the compound having an XLogP of 0.5 or more and 10 or less together with silica, and the dispersibility of silica in the rubber composition is improved due to the high hydrophilicity of the compound having an XLogP of 0.5 or more and 10 or less. Therefore, the rubber composition according to the present invention is also excellent in processability.

### DETAILED DESCRIPTION OF THE PREFERRED EMBODIMENTS

Examples of the rubber composition according to the present invention include the following first embodiment and second embodiment.

### [First embodiment]

The rubber composition according to the first embodiment of the present invention contains, per 100 parts by mass of the rubber component containing at least a diene-based rubber, 0.1 to 10 parts by mass of a compound represented by the following general formula (1): 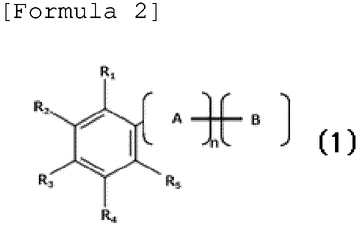 wherein at least one of R₁ to R₅ is an -OH group or an -OCH₃ group and others are each an -H group or a hydrocarbon group having 1 to 20 carbon atoms, A is an unsaturated bond or an alkylene group having 1 to 20 carbon atoms and optionally having an -H group, a -CH₃ group, an -NH₂ group, an -O- group, or an -OH group, n is an integer of 0 to 10, and B is a -COOH group, an -OH group, or an =O group and optionally forms a ring structure with adjacent R₁ or R₅. The content of the compound represented by the general formula (1) is more preferably 0.5 to 5 parts by mass per 100 parts by mass of the total amount of the rubber component.

The use of a naturally occurring compound as the compound represented by the general formula (1) is more preferred in terms of environmental protection. Examples of the naturally occurring compound include 3,4-dihydroxycinnamic acid (caffeic acid), 3,4-dimethoxycinnamic acid, curcumin, sesamol, coumaric acid, ferulic acid, sinapinic acid, chlorogenic acid, rosmarinic acid, 4-(4-hydroxy-3-methoxyphenyl)-2-butanone, naringin, hesperidin, quercetin, and tocopherol. In the present invention, among these compounds, at least one of 3,4-dihydroxycinnamic acid (caffeic acid) and 3,4-dimethoxycinnamic acid is more preferably used from the viewpoint of improving the WET performance and the low fuel consumption of the vulcanized rubber. The reason why the use of at least one of 3,4-dihydroxycinnamic acid and 3,4-dimethoxycinnamic acid improves the WET performance and the low fuel consumption of the vulcanized rubber is not known, but there may be, for example, the following reasons (1) to (3).
(1) When 3,4-dihydroxycinnamic acid and/or 3,4-dimethoxycinnamic acid are added together with a zinc compound such as zinc oxide to the rubber composition used as a raw material, two or more molecules of 3,4-dihydroxycinnamic acid or 3,4-dimethoxycinnamic acid coordinate to zinc through hydroxy groups or methoxy groups at R₂ and R₃ positions in the rubber composition so that the molecular weight increases due to the formation of a complex;
(2) when two or more molecules of 3,4-dihydroxycinnamic acid or 3,4-dimethoxycinnamic acid form a complex, the tendency to aggregate in the rubber composition is further enhanced, so that the viscosity of the rubber composition is more effectively increased; and
(3) In addition, since the rubber composition according to the present invention contains silica and the compound described in the general formula (1) has high hydrophilicity, it contributes to improving dispersibility of silica in the rubber composition, and the reaction of the compound described in the general formula (1) with the rubber component proceeds at a higher level while enhancing the reinforcing effect of silica. This further increases tanδ at 0°C (tanδ (0°C)) while a decrease in tanδ at 60°C (tanδ (60°C)). Consequently, it is considered that the WET performance and the low fuel consumption of vulcanized rubbers are further improved.

It is to be noted that a non-naturally occurring compound may be also used as the compound represented by the general formula (1). Examples of the non-naturally occurring compound include 2,3-dimethoxycinnamic acid, 2,4-dimethoxycinnamic acid, 2,5-dimethoxycinnamic acid, 2,3,4-tritoxycinnamic acid, 3,4,5-tritoxycinnamic acid, protocatechuic acid, 3-(3,4-dihydroxyphenyl)-L-alanine, 5,5',6,6'-tetrahydroxy-3,3,3',3'-tetramethyl-1,1'-spirobiindane, carvacrol, 3,4-dimethoxyhydrocinnamic acid, 5,6-dimethoxy-1-indanone, and 3,4-dihydroxyhydrocinnamic acid.

As the rubber component, for example, a diene-based rubber can suitably be used. Examples of the diene-based rubber include, but are not limited to, natural rubber (NR), isoprene rubber (IR), butadiene rubber (BR), styrene-butadiene rubber (SBR), acrylonitrile-butadiene rubber (NBR), chloroprene rubber (CR), styrene-isoprene copolymer rubber, a butadiene-isoprene copolymer, and styrene-isoprene-butadiene copolymer rubber. These butadiene-based rubbers may be used singly or in combination of two or more of them. The diene-based rubber is preferably butadiene rubber, styrene-butadiene rubber, or a blend of two or more of them.

The rubber composition according to the present invention contains silica. Since dispersibility of silica in the rubber composition improves due to the compound described in the general formula (1), the WET performance and the low fuel consumption of vulcanized rubbers are further improved. Examples of the silica to be used include silicas usually used for rubber reinforcement, such as wet silica, dry silica, sol-gel silica, and surface-treated silica. Among these, wet silica is preferred. The content of the silica is 20 to 150 parts by mass, preferably 20 to 100 parts by mass, more preferably 30 to 100 parts by mass, still more preferably 40 to 90 parts by mass per 100 parts by mass of the rubber component in the rubber composition.

When silica is contained as a filler, a silane coupling agent is also preferably contained together. The silane coupling agent is not limited as long as sulfur is contained in the molecule thereof, and various silane coupling agents to be added to rubber compositions together with silica may be used. Examples of such silane coupling agents include: sulfidesilanes such as bis(3-triethoxysilylpropyl)tetrasulfide (e.g., "Si69" manufactured by Degussa), bis(3-triethoxysilylpropyl)disulfide (e.g., "Si75" manufactured by Degussa), bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide; mercaptosilanes such as γ-mercaptopropyltrimethoxysilane, γ-mercaptopropyltriethoxysilane, mercaptopropylmethyldimethoxysilane, mercaptopropyldimethylmethoxysilane, and mercaptoethyltriethoxysilane; and protected mercaptosilanes such as 3-octanoylthio-1-propyltriethoxysilane and 3-propionylthiopropyltrimethoxysilane.

The rubber composition according to the present invention may contain, as a filler, carbon black. Examples of the carbon black that can be used include: carbon blacks usually used in the rubber industry, such as SAF, ISAF, HAF, FEF, and GPF; and conductive carbon blacks such as acetylene black and ketjen black. Among them, carbon black having N2SA of 140 to 250 m²/g is preferrable in the present invention since the WET performance and the low fuel consumption of vulcanized rubbers are further improved. The content of carbon black to be blended in the rubber composition is not particularly limited, and may be, for example, 20 to 150 parts by mass, and may be 30 to 100 parts by mass per 100 parts by mass of the diene-based rubber in a total amount containing silica.

The rubber composition according to the present invention may contain, in addition to the rubber component, the compound represented by the general formula (1) and silica and further carbon black, vulcanizing agent, a vulcanization accelerator, an antiaging agent, stearic acid, a softener such as wax or oil, a processing aid, etc.

As the vulcanizing agent, sulfur can suitably be used. The sulfur may be ordinary sulfur for rubber, and sulfur such as powdered sulfur, precipitated sulfur, insoluble sulfur, or highly dispersible sulfur can be used. The content of the sulfur is preferably 0.5 to 5 parts by mass per 100 parts by mass of the rubber component in the rubber composition according to the present invention.

Examples of the vulcanization accelerator include vulcanization accelerators usually used for rubber vulcanization, such as a sulfenamide-based vulcanization accelerator, a thiuram-based vulcanization accelerator, a thiazole-based vulcanization accelerator, a thiourea-based vulcanization accelerator, a guanidine-based vulcanization accelerator, and a dithiocarbamic acid salt-based vulcanization accelerator, and these may be used singly or in an appropriate combination.

In the rubber composition according to the present invention, examples of the antiaging agent include antiaging agents usually used for rubber, such as an aromatic amine-based antiaging agent, an amine-ketone-based antiaging agent, a monophenol-based antiaging agent, a bisphenol-based antiaging agent, a polyphenol-based antiaging agent, a dithiocarbamic acid salt-based antiaging agent, and a thiourea-based antiaging agent, and these may be used singly or in an appropriate combination.

The rubber composition according to the present invention is obtained by kneading the rubber component, the compound represented by the general formula (1) and silica and further carbon black, the vulcanizing agent, the vulcanization accelerator, the antiaging agent, stearic acid, the softener such as wax or oil, the processing aid, etc. with the use of a kneading machine usually used in the rubber industry, such as a Banbury mixer, a kneader, or a roll.

A method for blending the above components is not limited, and any one of the following methods may be used: a method in which components to be blended other than vulcanization-type compounding agents such as a vulcanizing agent and a vulcanization accelerator are previously kneaded to prepare a master batch, the remaining components are added to the master batch, and the resultant is further kneaded, a method in which components are added in any order and kneaded, and a method in which all the components are added at the same time and kneaded.

### [Second embodiment]

The rubber composition according to the second embodiment of the present invention contains 0.1 to 10 parts by mass of a compound having an XLogP of 0.5 or more and 10 or less per 100 parts by mass of the rubber component containing at least a diene-based rubber. The content of the compound having an XLogP of 0.5 or more and 10 or less is more preferably 0.5 to 5 parts by mass per 100 parts by mass of the total amount of the rubber component.

Hereinafter, XLogP in the present invention will be described.

The lipid solubility of a compound is a factor that greatly affects not only solubility but also pharmacokinetics such as absorption and metabolism, and a representative descriptor representing the lipid solubility of a compound is LogP, which is an octanol/water partition coefficient. P of LogP is a concentration ratio in an equilibrium state between the organic layer (octanol layer) and the aqueous layer of the molecule, and a common logarithm thereof is LogP. A large number indicates that the concentration in the organic layer is high, which means that the lipid solubility is high. However, LogP has a practical problem, and for example, a value of LogP can be experimentally obtained for each compound, but is not so realistic in terms of time and cost, and the number of reported compounds is not so large. In addition, there is a disadvantage that the LogP value of a compound that has not yet been synthesized cannot be experimentally obtained.

In order to solve the above-mentioned problem of LogP, there is an approach of estimating LogP by decomposing a molecule into individual atoms and calculating a sum of respective contributions, and among the atom-based approaches, only the XLogP algorithm adds a correction term, and a latest model of the XLogP series is described in a paper "Computation of Octanol-Water Partition Coefficients by Guiding an Additive Model with Knowledge". The value of LogP listed in PubChem, a chemical molecules database, maintained and managed by the National Center for Biotechnology Information (NCBI), a division of the National Library of Medicine (NLM) under the National Institutes of Health (NIH), is the basis of XLogP.

In the present invention, the use of a naturally occurring compound as the compound having an XLogP of 0.5 or more and 10 or less is more preferred in terms of environmental protection. Examples of the naturally occurring compound include 3,4-dihydroxycinnamic acid (caffeic acid) (XLogP = 1.2), 3,4-dimethoxycinnamic acid (XLogP = 1.8), curcumin (XLogP = 3.2), sesamol (XLogP = 1.2), coumaric acid (XLogP = 1.5), cinnamic acid (XLogP = 2.1), rosmarinic acid (XLogP = 2.4), ferulic acid (XLogP = 1.5), sinapinic acid (XLogP = 1.5), and 4-(4-hydroxy-3-methoxyphenyl)-2-butanone (XLogP = 0.8). In the present invention, among these compounds, at least one of 3,4-dihydroxycinnamic acid (caffeic acid) and 3,4-dimethoxycinnamic acid is more preferably used from the viewpoint of improving the WET performance and the low fuel consumption of the vulcanized rubber. The reason why the use of at least one of 3,4-dihydroxycinnamic acid and 3,4-dimethoxycinnamic acid improves the WET performance and the low fuel consumption of the vulcanized rubber is not known, but there may be, for example, the following reasons (1) to (3) .
(1) When 3,4-dihydroxycinnamic acid and/or 3,4-dimethoxycinnamic acid are added together with a zinc compound such as zinc oxide to the rubber composition used as a raw material, two or more molecules of 3,4-dihydroxycinnamic acid or 3,4-dimethoxycinnamic acid coordinate to zinc through hydroxy groups or methoxy groups at R₂ and R₃ positions in the rubber composition so that the molecular weight increases due to the formation of a complex;
(2) when two or more molecules of 3,4-dihydroxycinnamic acid or 3,4-dimethoxycinnamic acid form a complex, the tendency to aggregate in the rubber composition is further enhanced, so that the viscosity of the rubber composition is more effectively increased; and
(3) In addition, since the rubber composition according to the present invention contains silica and the compound having an XLogP of 0.5 or more and 10 or less has high hydrophilicity, it contributes to improving dispersibility of silica in the rubber composition, and the reaction of the compound having an XLogP of 0.5 or more and 10 or less with the rubber component proceeds at a higher level while enhancing the reinforcing effect of silica. This further increases tanδ at 0°C (tanδ (0°C)) while a decrease in tanδ at 60°C (tanδ (60°C)). Consequently, it is considered that the WET performance and the low fuel consumption of vulcanized rubbers are further improved.

It is to be noted that a non-naturally occurring compound may be also used as the compound having an XLogP of 0.5 or more and 10 or less. Examples of the non-naturally occurring compound include 2,3-dimethoxycinnamic acid (XLogP = 1.8), 2,4-dimethoxycinnamic acid (XLogP = 1.8), 2,5-dimethoxycinnamic acid (XLogP = 1.8), 2,3,4-tritoxycinnamic acid (XLogP = 1.7), 3,4,5-tritoxycinnamic acid (XLogP = 1.4), protocatechuic acid (XLogP = 1.1), catechol (XLogP = 0.9), 5,5',6,6'-tetrahydroxy-3,3,3',3'-tetramethyl-1,1'-spirobiindane (XLogP = 5.1), carvacrol (XLogP = 3.1), 3,4-dimethoxyhydrocinnamic acid (XLogP = 1.2), and 5,6-dimethoxy-1-indanone (XLogP = 1.6).

As the rubber component, for example, a diene-based rubber can suitably be used. Examples of the diene-based rubber include, but are not limited to, natural rubber (NR), isoprene rubber (IR), butadiene rubber (BR), styrene-butadiene rubber (SBR), acrylonitrile-butadiene rubber (NBR), chloroprene rubber (CR), styrene-isoprene copolymer rubber, a butadiene-isoprene copolymer, and styrene-isoprene-butadiene copolymer rubber. These butadiene-based rubbers may be used singly or in combination of two or more of them. The diene-based rubber is preferably butadiene rubber, styrene-butadiene rubber, or a blend of two or more of them.

The rubber composition according to the present invention contains silica. Since dispersibility of silica in the rubber composition improves due to the compound having an XLogP of 0.5 or more and 10 or less, the WET performance and the low fuel consumption of vulcanized rubbers are further improved. Examples of the silica to be used include silicas usually used for rubber reinforcement, such as wet silica, dry silica, sol-gel silica, and surface-treated silica. Among these, wet silica is preferred. The content of the silica is 20 to 150 parts by mass, preferably 20 to 100 parts by mass, more preferably 30 to 100 parts by mass, still more preferably 40 to 90 parts by mass per 100 parts by mass of the rubber component in the rubber composition.

When silica is contained as a filler, a silane coupling agent is also preferably contained together. The silane coupling agent is not limited as long as sulfur is contained in the molecule thereof, and various silane coupling agents to be added to rubber compositions together with silica may be used. Examples of such silane coupling agents include: sulfidesilanes such as bis(3-triethoxysilylpropyl)tetrasulfide (e.g., "Si69" manufactured by Degussa), bis(3-triethoxysilylpropyl)disulfide (e.g., "Si75" manufactured by Degussa), bis(2-triethoxysilylethyl)tetrasulfide, bis(4-triethoxysilylbutyl)disulfide, bis(3-trimethoxysilylpropyl)tetrasulfide, and bis(2-trimethoxysilylethyl)disulfide; mercaptosilanes such as γ-mercaptopropyltrimethoxysilane, γ-mercaptopropyltriethoxysilane, mercaptopropylmethyldimethoxysilane, mercaptopropyldimethylmethoxysilane, and mercaptoethyltriethoxysilane; and protected mercaptosilanes such as 3-octanoylthio-1-propyltriethoxysilane and 3-propionylthiopropyltrimethoxysilane.

The rubber composition according to the present invention may contain, as a filler, carbon black. Examples of the carbon black that can be used include: carbon blacks usually used in the rubber industry, such as SAF, ISAF, HAF, FEF, and GPF; and conductive carbon blacks such as acetylene black and ketjen black. Among them, carbon black having N2SA of 140 to 250 m²/g is preferrable in the present invention since the WET performance and the low fuel consumption of vulcanized rubbers are further improved. The content of carbon black to be blended in the rubber composition is not particularly limited, and may be, for example, 20 to 150 parts by mass, and may be 30 to 100 parts by mass per 100 parts by mass of the diene-based rubber in a total amount containing silica.

The rubber composition according to the present invention may contain, in addition to the rubber component, the compound having an XLogP of 0.5 or more and 10 or less and silica and further carbon black, vulcanizing agent, a vulcanization accelerator, an antiaging agent, stearic acid, a softener such as wax or oil, a processing aid, etc.

As the vulcanizing agent, sulfur can suitably be used. The sulfur may be ordinary sulfur for rubber, and sulfur such as powdered sulfur, precipitated sulfur, insoluble sulfur, or highly dispersible sulfur can be used. The content of the sulfur is preferably 0.5 to 5 parts by mass per 100 parts by mass of the rubber component in the rubber composition according to the present invention.

Examples of the vulcanization accelerator include vulcanization accelerators usually used for rubber vulcanization, such as a sulfenamide-based vulcanization accelerator, a thiuram-based vulcanization accelerator, a thiazole-based vulcanization accelerator, a thiourea-based vulcanization accelerator, a guanidine-based vulcanization accelerator, and a dithiocarbamic acid salt-based vulcanization accelerator, and these may be used singly or in an appropriate combination.

In the rubber composition according to the present invention, examples of the antiaging agent include antiaging agents usually used for rubber, such as an aromatic amine-based antiaging agent, an amine-ketone-based antiaging agent, a monophenol-based antiaging agent, a bisphenol-based antiaging agent, a polyphenol-based antiaging agent, a dithiocarbamic acid salt-based antiaging agent, and a thiourea-based antiaging agent, and these may be used singly or in an appropriate combination.

The rubber composition according to the present invention is obtained by kneading the rubber component, the compound having an XLogP of 0.5 or more and 10 or less and silica and further carbon black, the vulcanizing agent, the vulcanization accelerator, the antiaging agent, stearic acid, the softener such as wax or oil, the processing aid, etc. with the use of a kneading machine usually used in the rubber industry, such as a Banbury mixer, a kneader, or a roll.

A method for blending the above components is not limited, and any one of the following methods may be used: a method in which components to be blended other than vulcanization-type compounding agents such as a vulcanizing agent and a vulcanization accelerator are previously kneaded to prepare a master batch, the remaining components are added to the master batch, and the resultant is further kneaded, a method in which components are added in any order and kneaded, and a method in which all the components are added at the same time and kneaded.

The vulcanized rubber of the rubber composition according to the present invention is excellent in WET performance and low fuel consumption. Therefore, the rubber composition according to the present invention is useful as a raw material for a rubber part constituting a tread part of a pneumatic tire, but is particularly useful as a raw material for a rubber part constituting a tread part of studless tires that are required to have high WET performance and low fuel consumption.

### Examples

Hereinbelow, the configuration and effect of the present invention will be described with reference to specific examples etc.

### (Preparation of rubber compositions)

Rubber compositions of Examples 1 to 5 and Comparative Examples 1 to 5 were prepared according to formulations shown in Tables 1 to 2 and kneaded using a usual Banbury mixer. Compounding agents listed in Tables 1 to 2 are shown below (in Tables 1 to 2, the content of each of the compounding agents added is expressed in parts by mass per 100 parts by mass of the rubber component).
- Styrene-butadiene rubber; manufactured by JSR Corporation, trade name "HPR350", (Amino-group and alkoxysilyl-group end-modifying SBR)
- Butadiene rubber; manufactured by Ube Corporation, trade name "UBEPOL BR150B"
- Silica; manufactured by TOSOH SILICA CORPORATION, trade name "Nipsil AQ"
- Silane coupling agent; Bis(3-triethoxysilylpropyl)tetrasulfide, "Si69" manufactured by Evonik Industries AG
- Carbon black; manufactured by Tokai Carbon Co., Ltd., trade name "SEAST 3" (N2SA: 79 m²/g)
- Zinc white; manufactured by MITSUI MINING & SMELTING CO., LTD., trade name "Zinc white #1"
- Stearic acid; manufactured by Kao Corporation, trade name "LUNAC S-20"
- Antiaging agent; manufactured by Ouchi Shinko Chemical Industrial Co., Ltd., trade name: "Nocrac 6C"
- 3,4-Dimethoxycinnamic acid
- 3,4-Dihydroxycinnamic acid (caffeic acid)
- Acetamide cinnamic acid (compound not corresponding to compound represented by general formula (1))
- Sulfur; manufactured by Tsurumi Chemical Industry Co., ltd., trade name "Powder Sulfur"
- Vulcanization accelerator; manufactured by Ouchi Shinko Chemical Industrial Co., Ltd., trade name "NOCCELER CZ"

The processability of the rubber compositions of Examples 1 to 5 and Comparative Examples 1 to 5, and the tanδ (0°C) and tanδ (60°C) of the vulcanized rubber of each of the rubber compositions of Examples 1 to 5 and Comparative Examples 1 to 5 were evaluated by the following methods.

### <Processability of rubber composition>

In accordance with JIS K6300, the rubber composition was afterheated at 100°C for 1 minute and then measured after 4 minutes using a Rotaress Mooni Viscometer manufactured by Toyo Seiki Seisakusho Co., Ltd. In Tables 1-2, processability was displayed as an index with the value of Mooney viscosity in Comparative Example 1 set as 100. Regarding processability, it is shown that the smaller the index is, the better the processability is.

### <tanδ (0°C) and tanδ (60°C) of vulcanized rubber>

The rubber compositions of Examples 1 to 5 and Comparative Examples 1 to 5 were heated and vulcanized at 160°C for 30 minutes using a predetermined mold, and the thus obtained sample rubbers were used as measurement samples. The storage elastic modulus (E') and loss elastic modulus (E'') were measured for each measurement sample by a dynamic viscoelasticity measuring device (product name "Fully Automatic Viscoelasticity Analyzer VR-7110", manufactured by Ueshima Seisakusho Co., Ltd.) to measure tanδ (0°C) and tanδ (60°C). In Tables 1 to 2, the measured value was expressed as an index when the value of tanδ (0°C) and tanδ (60°C) in Comparative Example 1 is 100. As for tanδ (0°C), the larger the index is, the better the WET performance is when used in the tread part of the pneumatic tire. As for tanδ (60°C), the smaller the index is, the better the low fuel consumption is when used in the tread part of the pneumatic tire. Measurement conditions are as follows.
Size of measurement sample: length 40 mm, width 3 mm, thickness 2 mm
Measurement mode: Tensile mode
Measurement temperature: 0°C
Frequency: 100 Hz
Dynamic strain: 0.15%

**[Table 1]**

| | Comparati ve Example 1 | Comparati ve Example 2 | Example 1 | Example 2 | Example 3 |
|---|---|---|---|---|---|
| (Formulation) | | | | | |
| Styrene-butadiene rubber | 70 | 70 | 70 | 70 | 70 |
| Butadiene rubber | 30 | 30 | 30 | 30 | 30 |
| Silica | 70 | 100 | 70 | 85 | 100 |
| Silane coupling agent | 5.6 | 8 | 5.6 | 6.4 | 8 |
| Zinc white | 2 | 2 | 2 | 2 | 2 |
| Stearic acid | 2 | 2 | 2 | 2 | 2 |
| Antiaging agent | 2 | 2 | 2 | 2 | 2 |
| 3,4-Dimethoxycinnamic acid (compound not corresponding to compound represented by general formula (1)) | | | 0.5 | 2 | 5 |
| 3,4-Dihydroxycinnamic acid (compound not corresponding to compound represented by general formula (1)) | | | | | |
| Acetamide cinnamic acid (compound not corresponding to compound represented by general formula (1)) | | | | | |
| Sulfur | 2 | 2 | 2 | 2 | 2 |
| Vulcanization accelerator | 2 | 2 | 2 | 2 | 2 |

| (Physical properties (index)) | | | | | |
|---|---|---|---|---|---|
| Processability | 100 | 118 | 95 | 96 | 98 |
| tanδ 0°C | 100 | 85 | 102 | 107 | 111 |
| tanδ 60°C | 100 | 121 | 99 | 98 | 97 |

From the results of Table 1, it can be seen that the rubber composition of Comparative Example 2 has deteriorated processability by increasing the amount of silica blended. In addition, it can be seen that the vulcanized rubber of the rubber composition of Comparative Example 2 deteriorates both tanδ (0°C) and tanδ (60°C). On the other hand, it can be seen that, in the vulcanized rubber of the rubber compositions of Examples 1 to 3, both of the WET performance and the low fuel consumption are well balanced due to the improvement in both tanδ (0°C) and tanδ (60°C) when used in the tread portion of the pneumatic tire due to the synergistic effect of the 3,4-dimeth oxycinnamic acid corresponding to the compound described in the general formula (1) and silica. In addition, it can be seen that the rubber compositions of Examples 1 to 3 have improved processability with improvement in dispersibility of silica caused by 3,4-dimethoxycinnamic acid corresponding to the compound described in the general formula (1).

**[Table 2]**

| | Comparati ve Example 1 | Comparati ve Example 3 | Example 4 | Example 5 | Comparati ve Example 4 | Comparati ve Example 5 |
|---|---|---|---|---|---|---|
| (Formulation) | | | | | | |
| Styrene-butadiene rubber | 70 | 70 | 70 | 70 | 70 | 70 |
| Butadiene rubber | 30 | 30 | 30 | 30 | 30 | 30 |
| Silica | 70 | 70 | 85 | 100 | 85 | 100 |
| Silane coupling agent | 5.6 | 5.6 | 6.4 | 8 | 6.4 | 8 |
| Zinc white | 2 | 2 | 2 | 2 | 2 | 2 |
| Stearic acid | 2 | 2 | 2 | 2 | 2 | 2 |
| Antiaging agent | 2 | 2 | 2 | 2 | 2 | 2 |
| 3,4-Dimethoxycinnamic acid (compound not corresponding to compound represented by general formula (1)) | | 12 | | | | |
| 3,4-Dihydroxycinnamic acid (compound not corresponding to compound represented by general formula (1)) | | | 2 | 5 | | |
| Acetamide cinnamic acid (compound not corresponding to compound represented by general formula (1)) | | | | | 2 | 5 |
| Sulfur | 2 | 2 | 2 | 2 | 2 | 2 |
| Vulcanization accelerator | 2 | 2 | 2 | 2 | 2 | 2 |

| (Physical properties (index)) | | | | | | |
|---|---|---|---|---|---|---|
| Processability | 100 | 85 | 96 | 97 | 96 | 98 |
| tanδ 0°C | 100 | 101 | 107 | 112 | 107 | 111 |
| tanδ 60°C | 100 | 110 | 97 | 95 | 111 | 121 |

From the results shown in Table 2, it can be seen that, in the vulcanized rubber of the rubber composition of Comparative Example 3, since the blending amount of the 3,4-dimethoxycinnamic acid corresponding to the compound described in the general formula (1) is excessive, tanδ (60°C) is deteriorated due to excessive aggregation of the 3,4-dimethoxycinnamic acid corresponding to the compound described in the general formula (1). In addition, in the vulcanized rubber of the rubber compositions of Comparative Examples 4 to 5, since the blended acetamidosilicarsenic acid is a compound which does not correspond to the compound described in the general formula (1), it is found that tanδ (60°C) deteriorates. On the other hand, from the results of Examples 4 to 5, it can be seen that a rubber composition blended with a 3,4-dihydroxycinnamic acid corresponding to the compound described in the general formula (1) is excellent in processability, and the same effect can be obtained with the vulcanized rubber.

### (Preparation of rubber compositions)

Rubber compositions of Examples 5 to 12 and Comparative Examples 6 to 11 were prepared according to formulations shown in Tables 3 to 4 and kneaded using a usual Banbury mixer. Compounding agents listed in Tables 3 to 4 are shown below (in Tables 3 to 4, the content of each of the compounding agents added is expressed in parts by mass per 100 parts by mass of the rubber component).
- Styrene-butadiene rubber; manufactured by JSR Corporation, trade name "HPR350", (Amino-group and alkoxysilyl-group end-modifying SBR)
- Butadiene rubber; manufactured by Ube Corporation, trade name "UBEPOL BR10B"
- Silica; manufactured by TOSOH SILICA CORPORATION, trade name "Nipsil AQ"
- Silane coupling agent; Bis(3-triethoxysilylpropyl)tetrasulfide, "Si69" manufactured by Evonik Industries AG
- Carbon black; manufactured by Tokai Carbon Co., Ltd., trade name "SEAST 3" (N2SA: 79 m²/g)
- Zinc white; manufactured by MITSUI MINING & SMELTING CO., LTD., trade name "Zinc white #1"
- Stearic acid; manufactured by Kao Corporation, trade name "LUNAC S-20"
- Antiaging agent; manufactured by Ouchi Shinko Chemical Industrial Co., Ltd., trade name: "Nocrac 6C"
- 3,4-Dimethoxycinnamic acid (XLogP = 1.8)
- 3,4-Dihydroxycinnamic acid (XLogP = 1.2)
- Catechol (XLogP = 0.9)
- Cinnamic acid (XLogP = 2.1)
- 5,5',6,6'-Tetrahydroxy-3,3,3',3'-tetramethyl-1,1'-spirobiindane (XLogP = 5.1)
- Acetamide cinnamic acid (XLogP = 0)
- Tocopherol (XLogP = 10.7)
- Sulfur; manufactured by Tsurumi Chemical Industry Co., ltd., trade name "Powder Sulfur"
- Vulcanization accelerator; manufactured by Ouchi Shinko Chemical Industrial Co., Ltd., trade name "NOCCELER CZ"

The processability of the rubber compositions of Examples 5 to 12 and Comparative Examples 6 to 11, and the tanδ (0°C) and tanδ (60°C) of the vulcanized rubber of each of the rubber compositions of Examples 5 to 12 and Comparative Examples 6 to 11 were evaluated by the following methods.

### <Processability of rubber composition>

In accordance with JIS K6300, the rubber composition was afterheated at 100°C for 1 minute and then measured after 4 minutes using a Rotaress Mooni Viscometer manufactured by Toyo Seiki Seisakusho Co., Ltd. In Tables 3-4, processability was displayed as an index with the value of Mooney viscosity in Comparative Example 6 set as 100. Regarding processability, it is shown that the smaller the index is, the better the processability is.

### <tanδ (0°C) and tanδ (60°C) of vulcanized rubber>

The rubber compositions of Examples 5 to 12 and Comparative Examples 6 to 11 were heated and vulcanized at 160°C for 30 minutes using a predetermined mold, and the thus obtained sample rubbers were used as measurement samples. The storage elastic modulus (E') and loss elastic modulus (E'') were measured for each measurement sample by a dynamic viscoelasticity measuring device (product name "Fully Automatic Viscoelasticity Analyzer VR-7110", manufactured by Ueshima Seisakusho Co., Ltd.) to measure tanδ (0°C) and tanδ (60°C). In Tables 3 to 4, the measured value was expressed as an index when the value of tanδ (0°C) and tanδ (60°C) in Comparative Example 6 is 100. As for tanδ (0°C), the larger the index is, the better the WET performance is when used in the tread part of the pneumatic tire. As for tanδ (60°C), the smaller the index is, the better the low fuel consumption is when used in the tread part of the pneumatic tire. Measurement conditions are as follows.
Size of measurement sample: length 40 mm, width 3 mm, thickness 2 mm
Measurement mode: Tensile mode
Measurement temperature: 0°C
Frequency: 100 Hz
Dynamic strain: 0.15%

**[Table 3]**

| | Comparativ e Example 6 | Comparativ e Example 7 | Example 5 | Example 6 | Example 7 | Comparativ e Example 8 |
|---|---|---|---|---|---|---|
| (Formulation) | | | | | | |
| Styrene-butadiene rubber | 70 | 70 | 70 | 70 | 70 | 70 |
| Butadiene rubber | 30 | 30 | 30 | 30 | 30 | 30 |
| Silica | 70 | 100 | 70 | 85 | 100 | 70 |
| Silane coupling agent | 5.6 | 8 | 5.6 | 6.4 | 8 | 5.6 |
| Carbon black | 5 | 5 | 5 | 5 | 5 | 5 |
| Zinc white | 2 | 2 | 2 | 2 | 2 | 2 |
| Stearic acid | 2 | 2 | 2 | 2 | 2 | 2 |
| Antiaging agent | 2 | 2 | 2 | 2 | 2 | 2 |
| 3,4-Dimethoxycinnamic acid (XLogP = 1.8) | | | 0.5 | 2 | 5 | 12 |
| 3,4-Dihydroxycinnamic acid (caffeic acid) (XLogP = 1.2) | | | | | | |
| Catechol (XLogP = 0.9) | | | | | | |
| Cinnamic acid (XLogP = 2.1) | | | | | | |
| 5,5',6,6'-tetrahydroxy-3,3,3',3'-tetramethyl-1,1'-spirobiindane (XLogP = 5.1) | | | | | | |
| Acetamidocinnamic acid (XLogP=0) | | | | | | |
| Tocopherol (XLogP=10.7) | | | | | | |
| Sulfur | 2 | 2 | 2 | 2 | 2 | 2 |
| Vulcanization accelerator | 2 | 2 | 2 | 2 | 2 | 2 |

| (Physical properties (index)) | | | | | | |
|---|---|---|---|---|---|---|
| Processability | 100 | 118 | 95 | 96 | 98 | 85 |
| tanδ 0°C | 100 | 85 | 102 | 107 | 111 | 101 |
| tanδ 60°C | 100 | 121 | 99 | 98 | 97 | 110 |

From the results shown in Table 3, it can be seen that the rubber composition of Comparative Example 7 has deteriorated processability by increasing the amount of silica blended. In addition, it can be seen that the vulcanized rubber of the rubber composition of Comparative Example 7 deteriorates both tanδ (0°C) and tanδ (60°C). On the other hand, vulcanized rubber of Rubber compositions of Examples 5-7 shows that synergy of silica with 3,4-dimeth oxycinnamic acid (XLogP = 1.8), which is the compound having an XLogP of 0.5 or more and 10 or less, results in well-balanced improvements in both the WET performance and the low fuel consumption due to the improvement in both tanδ (0°C) and tanδ (60°C) when used in the tread portion of the pneumatic tire. In addition, it can be seen that the rubber compositions of Examples 5 to 7 have improved processability with improvement in dispersibility of silica caused by 3,4-dimethoxycinnamic acid. It is to be noted that, in the vulcanized rubber of the rubber composition of Comparative Example 8, since the blending amount of the 3,4-dimethoxycinnamic acid is excessive, it is found that tanδ (60°C) deteriorates due to excessive aggregation of the 3,4-dimethoxycinnamic acid.

**[Table 4]**

| | Comparat ive Example 6 | Examp le 8 | Examp le 9 | Examp le 10 | Examp le 11 | Examp le 12 | Comparat ive Example 9 | Comparat ive Example 10 | Comparat ive Example 11 |
|---|---|---|---|---|---|---|---|---|---|
| (Formulation) | | | | | | | | | |
| Styrene-butadiene rubber | 70 | 70 | 70 | 70 | 70 | 70 | 70 | 70 | 70 |
| Butadiene rubber | 30 | 30 | 30 | 30 | 30 | 30 | 30 | 30 | 30 |
| Silica | 70 | 85 | 100 | 85 | 85 | 85 | 85 | 100 | 70 |
| Silane coupling agent | 5.6 | 6.4 | 8 | 6.4 | 6.4 | 6.4 | 6.4 | 8 | 5.6 |
| Carbon black | 5 | 5 | 5 | 5 | 5 | 5 | 5 | 5 | 5 |
| Zinc white | 2 | 2 | 2 | 2 | 2 | 2 | 2 | 2 | 2 |
| Stearic acid | 2 | 2 | 2 | 2 | 2 | 2 | 2 | 2 | 2 |
| Antiaging agent | 2 | 2 | 2 | 2 | 2 | 2 | 2 | 2 | 2 |
| 3,4-Dimethoxycinn amic acid (XLogP = 1.8) | | | | | | | | | |
| 3,4-Dihydroxycinn amic acid (caffeic acid) (XLogP = 1.2) | | 2 | 5 | | | | | | |
| Catechol (XLogP = 0.9) | | | | 0.8 | | | | | |
| Cinnamic acid (XLogP = 2.1) | | | | | 1.1 | | | | |
| 5,5',6,6'-tetrahydroxy-3,3,3',3'-tetramethyl-1,1'-spirobiindane (XLogP = 5.1) | | | | | | 2.3 | | | |
| Acetamidocinn amic acid (XLogP=0) | | | | | | | 2 | 5 | |
| Tocopherol (XLogP=10.7) | | | | | | | | | 3.2 |
| Sulfur | 2 | 2 | 2 | 2 | 2 | 2 | 2 | 2 | 2 |
| Vulcanization accelerator | 2 | 2 | 2 | 2 | 2 | 2 | 2 | 2 | 2 |

| (Physical properties (index)) | | | | | | | | | |
|---|---|---|---|---|---|---|---|---|---|
| Processabilit Y | 100 | 96 | 97 | 96 | 95 | 94 | 96 | 98 | 98 |
| tanδ 0°C | 100 | 107 | 112 | 107 | 110 | 102 | 107 | 111 | 96 |
| tanδ 60°C | 100 | 97 | 95 | 95 | 96 | 98 | 111 | 121 | 106 |

As can be seen from the results shown in Table 4, vulcanized rubber of Rubber compositions of Examples 8-12 shows that synergy of silica with 3,4-dihydroxycinnamic acid (XLogP = 1.2), catechol (XLogP = 0.9), cinnamic acid (XLogP = 2.1), or 5,5',6,6'-tetrahydroxy-3,3,3',3'-tetramethyl-1,1'-spirobiindane (XLogP = 5.1), which is the compound having an XLogP of 0.5 or more and 10 or less, results in well-balanced improvements in both the WET performance and the low fuel consumption due to the improvement in both tanδ (0°C) and tanδ (60°C) when used in the tread portion of the pneumatic tire. In addition, it can be seen that the rubber compositions of Examples 8 to 12 have improved processability with an improvement in dispersibility of silica caused by 3,4-dihydroxycinnamic acid, catechol, cinnamic acid, and 5,5 ', 6,6 '-tetrahydroxy-3,3,3 ', 3 '-tetramethyl-1,1 '-spirobiindane. On the other hand, since the vulcanized rubber of the rubber compositions of Comparative Examples 9 to 10 contain acetamido cinnamic which is not the compound having an XLogP of 0.5 or more and 10 or less, it is understood that tanδ (60°C) deteriorates. Moreover, since the vulcanized rubber of the rubber compositions of Comparative Example 11 contain tocopherol which is not the compound having an XLogP of 0.5 or more and 10 or less, it is understood that tanδ (0°C) and tanδ (60°C) deteriorates.

## Claims

1. A rubber composition comprising, per 100 parts by mass of a rubber component containing at least a diene-based rubber, 0.1 to 10 parts by mass of a compound represented by the following general formula (1): 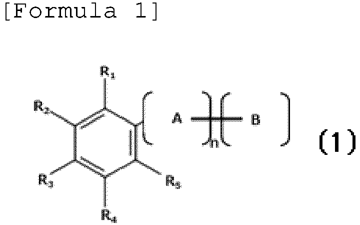 wherein at least one of R₁ to R₅ is an -OH group or an -OCH₃ group and others are each an -H group or a hydrocarbon group having 1 to 20 carbon atoms, A is an unsaturated bond or an alkylene group having 1 to 20 carbon atoms and optionally having an -H group, a -CH₃ group, an -NH₂ group, an -O- group, or an -OH group, n is an integer of 0 to 10, and B is a -COOH group, an -OH group, or an =O group and optionally forms a ring structure with adjacent R₁ or R₅; and 20 to 150 parts by mass of silica.

2. The rubber composition according to claim 1, wherein the compound represented by the general formula (1) is a naturally occurring compound.

3. The rubber composition according to claim 1 or 2, wherein the compound represented by the general formula (1) is at least one of 3,4-dihydroxycinnamic acid and 3,4-dimethoxycinnamic acid.

4. A pneumatic tire comprising a rubber part containing a vulcanized rubber of the rubber composition according to any one of claims 1 to 3.

5. A rubber composition comprising, per 100 parts by mass of a rubber component containing at least a diene-based rubber, 0.1 to 10 parts by mass of a compound having an XLogP of 0.5 or more and 10 or less; and 20 to 150 parts by mass of silica.

6. The rubber composition according to claim 5, wherein the compound having an XLogP of 0.5 or more and 10 or less is a naturally occurring compound.

7. The rubber composition according to claim 5 or 6, wherein the compound having an XLogP of 0.5 or more and 10 or less is at least one of 3,4-dihydroxycinnamic acid and 3,4-dimethoxycinnamic acid.

8. A pneumatic tire comprising a rubber part containing a vulcanized rubber of the rubber composition according to any one of claims 5 to 7.
